# FASCICULE DE BREVET EUROPEEN

(11) **EP 3 513 270 B1**
(45) Date de publication et mention de la délivrance du brevet: **09.09.2020**
(21) Numéro de dépôt: 18808236.6
(22) Date de dépôt: 08.11.2018
(51) Int. Cl.: G06F 3/01

(54) **PROCÉDÉ DE COMMANDE D'UN OBJET PORTABLE ET OBJET PORTABLE CONTRÔLÉ PAR UN TEL PROCÉDÉ**
VERFAHREN ZUR STEUERUNG EINES TRAGBAREN OBJEKTS UND DURCH SOLCH EIN VERFAHREN GESTEUERTES TRAGBARES OBJEKT
METHOD FOR CONTROLLING A PORTABLE OBJECT AND PORTABLE OBJECT CONTROLLED BY SUCH A METHOD

(30) Priorité: 13.11.2017 FR 1760665
(43) Date de publication de la demande: 24.07.2019
(73) Titulaire: Sas Joyeuse, 75012 Paris (FR)
(72) Inventeur: ROUMENS, Mathieu, 75012 Paris (FR)
(74) Mandataire: IPAZ
(86) Numéro de dépôt international: PCT/EP2018/080645
(87) Numéro de publication internationale: WO 2019/092120

(56) Documents cités:
- GB-A- 2 533 389
- US-A1- 2007 257 885
- US-A1- 2011 084 900

## Description

### Domaine technique

La présente invention se rapporte au domaine des procédés et des systèmes de commande de contrôle et de commande de dispositifs électroniques.

La présente invention concerne en particulier un procédé de commande d'un objet portable et un objet portable contrôlé par un tel procédé. L'invention vise en particulier la commande d'un objet portable multimédia.

### Etat de la technique antérieure

On connait dans l'état de la technique antérieure des procédés de commande basés sur la manipulation de boutons, leviers et molettes situés sur une surface extérieure d'un objet électronique. Cette manipulation engendre l'activation, la désactivation ou la modification d'une fonction mise en œuvre par l'objet électronique en question. Ce type de commandes nécessite d'adapter le stylisme et l'ergonomie de l'objet électronique en fonction des boutons et/ou molettes à intégrer sur la surface extérieure de l'objet.

On connait également dans l'état de la technique antérieure des procédés de commandes tactiles d'un objet électroniques basés sur l'application par un utilisateur d'un contact mécanique localisé avec une zone prédéterminée d'une surface sensible de l'objet électronique. Ces surfaces sensibles comportent des « capteurs tactiles », pour la plupart capacitifs, dont le prix est élevé et qui ne fonctionnent principalement qu'au contact des doigts. Ces surfaces tactiles situées sur la surface extérieure de l'objet sont sensibles, entre autres, aux chocs, aux liquides et à l'humidité, et y sont pourtant exposées.

En particulier, on connait dans l'état de la technique antérieure le document US2011/084900 qui décrit un dispositif d'affichage sans fil pour afficher le contenu d'un dispositif électronique distant. On connait également le document US2007/257885 qui décrit un pointeur optique. Enfin, on connait le document GB2533389 qui décrit un dispositif de contrôle d'un paramètre de compression d'un dispositif pour mammographie et de de contrôle d'ambiance.

Un des défauts majeurs des procédés de commande précédemment cités, est lié au fait que la manipulation de ces commandes n'est adaptée ni aux enfants dont la motricité fine n'est pas suffisamment développée, ni aux personnes mal voyantes, ni aux séniors, aux personnes handicapés ou atteintes de troubles moteurs ou neurodégénératifs.

Plus récemment on connait dans l'état de la technique antérieure des procédés de commandes vocales, visant à engendrer une activation, une désactivation ou une modification d'une fonction mise en œuvre par l'objet électronique en réponse à une commande vocale émise par un utilisateur. Néanmoins, de tels procédés ne conviennent pas à une utilisation dans des environnements bruyants, en particulier pour les applications domestiques ou en présence de musique ou de bruit de fond. De plus, l'activation de telles commandes n'est accessible ni aux enfants n'ayant pas une maîtrise suffisante de la langue, ni aux personnes malentendantes.

On connait également dans l'état de la technique des procédés de commande d'un objet connecté mis en œuvre via l'interface d'un objet délocalisé, tel qu'un smartphone par exemple. Ce type de procédé présente l'inconvénient de nécessiter l'installation d'une application dédiée à l'objet connecté sur son smartphone et d'augmenter le temps et l'attention portée à son smartphone.

Un inconvénient commun aux procédés et dispositifs de commandes existants résident dans le fait que les objets électroniques à commander doivent être pourvus de zones et/ou boutons à insérer sur la surface extérieure de l'objet.

Un but de l'invention est de proposer un procédé de commande et un objet portable contrôlé par un tel procédé :
- résolvant, au moins en partie, les inconvénients des procédés de commande précités, et/ou
- faisant d'avantage appel à la motricité globale qu'à la motricité fine de l'utilisateur, et/ou
- simplifiant et rendant plus intuitif la commande et/ou le contrôle des objets portables, et/ou
- ne nécessitant l'utilisation d'aucun bouton de commande sur la surface extérieure de l'objet portable, et/ou
- différent des procédés existants et permettant l'utilisation de l'objet portable contrôlé par un tel procédé par tout type de population, par exemple des enfants en très bas âge, des séniors et des personnes handicapés ou atteintes de troubles moteurs ou neurodégénératifs.

### Exposé de l'invention

L'étendue de l'invention est définie par les revendications annexées.

A cet effet, selon un premier aspect de l'invention, il est proposé un procédé de commande d'un objet portable selon la revendication indépendante 1, comprenant :
- une augmentation d'une intensité d'un signal émis par l'objet en réponse à une rotation dans le sens horaire, ou respectivement anti-horaire, de l'objet par rapport à un premier axe de rotation traversant l'objet,
- une diminution de l'intensité d'un signal émis par l'objet en réponse à une rotation dans le sens anti-horaire, ou respectivement horaire, de l'objet par rapport au premier axe de rotation.

Le terme « axe de rotation traversant l'objet » est entendu comme un axe de rotation dont au moins une partie est comprise dans l'objet, ou encore comme un axe de rotation traversant au moins une partie de l'objet.

Un signal peut être composé d'un ensemble de signaux émis par l'objet.

L'objet portable peut comprendre une ou plusieurs faces.

L'objet portable peut être un objet portable multimédia facetté.

L'objet portable peut être un polyèdre.

L'objet portable peut être un cube.

Un niveau d'augmentation ou de diminution de l'intensité d'un signal émis par l'objet peut être incrémenté pour chaque rotation de l'objet, par rapport au premier axe de rotation, d'un angle de 5°.

Le signal émis par l'objet peut être un signal :
- sonore, ou
- optique, ou
- vibratoire, ou
- olfactif, ou
- radio.

Il est entendu par signal vibratoire, un signal émis par un dispositif vibrant et/ou un dispositif agencé pour émettre des vibrations. Conformément au procédé selon la revendication indépendante 1, un passage de l'objet d'un état de veille à un état activé est initié en réponse à : -une rotation de l'objet d'un angle supérieur ou égal à une première valeur d'angle minimum par rapport à un axe de rotation traversant l'objet, et/ou -une agitation de l'objet selon un mouvement de va-et-vient.

L'axe de rotation traversant l'objet peut être perpendiculaire à au moins une face de l'objet.

La première valeur d'angle minimum peut être supérieure ou égale à 360°.

La première valeur d'angle minimum peut être supérieure ou égale à 450°.

De préférence, lorsque la rotation de l'objet par rapport à l'axe de rotation traversant l'objet est interrompue pendant un laps de temps supérieur à une deuxième durée minimale, l'angle de rotation de l'objet, pris en compte pour initier le passage de l'objet d'un état de veille à un état activé, est réinitialisé.

La deuxième durée minimale peut être supérieure ou égale à 2 secondes.

Le sens de rotation de l'objet, par rapport à l'axe de rotation traversant l'objet, initiant le passage de l'objet d'un état de veille à un état activé, peut être horaire ou antihoraire.

Il est entendu par agitation de l'objet, un secouage de l'objet.

Il peut être entendu par agitation de l'objet, un secouage de l'objet selon un mouvement de va-et-vient.

L'agitation peut être réalisée selon un mouvement vertical ou horizontal.

Une trajectoire d'agitation de l'objet peut comprendre une composante translationnelle, et une composante rotationnelle.

La composante rotationnelle de la trajectoire d'agitation de l'objet est associée à un mouvement de rotation de l'objet par rapport à un axe de rotation n'ayant aucune section commune avec l'objet. Un passage de l'objet d'un état activé à un état de veille peut être initié en réponse à une rotation de l'objet d'un angle supérieur ou égal à une deuxième valeur d'angle minimum par rapport à un deuxième axe de rotation traversant l'objet.

La deuxième valeur d'angle minimum peut être supérieure ou égale à 360°.

La deuxième valeur d'angle minimum peut être supérieure ou égale à 450°.

De préférence, lorsque la rotation de l'objet par rapport à l'axe de rotation traversant l'objet est interrompue pendant un laps de temps supérieur à la deuxième durée minimale, l'angle de rotation de l'objet, pris en compte pour initier le passage de l'objet d'un état activé à un état de veille, est réinitialisé.

La deuxième durée minimale peut être supérieure ou égale à 2 secondes.

Le sens de rotation de l'objet, par rapport à l'axe de rotation traversant l'objet, initiant le passage de l'objet d'un état de veille à un état activé, peut être horaire ou antihoraire. Une lecture d'un contenu média par l'objet peut être initiée en réponse à une agitation de l'objet selon un mouvement de va-et-vient, le contenu média lu étant associé à une face de l'objet orientée vers le haut.

Un contenu média peut être tout type de fichier numérique.

Un contenu média peut être une fréquence radio.

Un contenu média peut être, entre autre, une piste audio et/ou vidéo.

Le contenu média lu peut être associé à une face de l'objet orientée vers le haut lors de l'initiation de l'agitation.

La face de l'objet orientée vers le haut durant l'agitation peut être maintenue vers le haut durant toute la durée de l'agitation.

Le contenu média peut comprendre un ensemble de contenus, dans ce cas, après initiation de la lecture, les contenus média sont lus successivement ou aléatoirement.

Plusieurs contenus peuvent être lus simultanément. Un contenu média en cours de lecture peut être indexé dans un dossier dédié en réponse à un déplacement de l'objet selon une trajectoire particulière prédéfinie.

La trajectoire particulière prédéfinie correspond à un déplacement de l'objet selon deux directions de l'espace ou plus, les directions étant clairement distinctes.

De manière préférée, la trajectoire est comprise dans un plan.

La trajectoire particulière prédéfinie peut être, par exemple, une forme géométrique.

La trajectoire particulière prédéfinie peut être, par exemple, un cœur.

Le ou les contenus média stockés dans le dossier dédié peuvent être associés à une des faces de l'objet. Un nouveau contenu média peut être lu en réponse à une rotation de l'objet d'un angle supérieur à une troisième valeur d'angle minimum par rapport à un troisième axe de rotation traversant l'objet, ladite rotation étant succédée, dans un laps de temps inférieur ou égal à une première durée maximale, par un retour de l'objet dans sa position initiale, le nouveau contenu média succède au contenu média en cours de lecture au sein d'une liste de contenus média ; ladite liste de contenus média étant associée à la face de l'objet orientée vers le haut lorsque l'objet est dans sa position initiale.

Lorsque la rotation de l'objet par rapport au troisième axe de rotation traversant l'objet est effectuée selon le sens horaire, le nouveau contenu média succède au contenu média en cours de lecture au sein de la liste de contenus média. Lorsque la rotation de l'objet par rapport au troisième axe de rotation traversant l'objet est effectuée selon le sens antihoraire, le nouveau contenu média précède le contenu média en cours de lecture au sein de la liste de contenus média.

La troisième valeur d'angle minimum peut être supérieure à 10°.

La première durée maximale peut être inférieure ou égale à 2 secondes.

Les contenus média de la liste peuvent être listés de manière ordonnée.

Une liste de contenus média peut comprendre :
- un ensemble de fichiers numériques, ou
- un ensemble de pistes audio et/ou vidéo, ou
- un ensemble de fréquences radio.

La lecture des contenus média peut être mise en œuvre selon la liste de contenus ou de façon aléatoire. Le procédé peut comprendre une avance rapide vers une fin du contenu, en cours de lecture, et un retour rapide vers un début du contenu, en cours de lecture, en réponse à une rotation de l'objet d'un angle supérieur à une quatrième valeur d'angle minimum par rapport à un quatrième axe de rotation traversant l'objet, l'avance et le retour rapide étant enclenchés lorsque l'angle est maintenu pendant une durée supérieure à une première durée minimale et poursuivis tant que l'angle est maintenu, le sens de rotation de l'objet associé au retour rapide étant inverse à celui associé à l'avance rapide.

La quatrième valeur d'angle minimum peut être supérieure à 10°.

La première durée minimale peut être supérieure à 2 secondes. La face de l'objet orientée vers le haut peut être parallèle à un plan horizontal, le premier axe de rotation pouvant être perpendiculaire à ladite face orientée vers le haut, le second axe de rotation pouvant être identique au premier axe de rotation, et le quatrième axe de rotation peut être identique au troisième axe de rotation, perpendiculaire au premier axe de rotation et orienté selon une direction prédéfinie par rapport à la face de l'objet orientée vers le haut.

Le troisième et/ou le quatrième axe de rotation sont orientés relativement à la face de l'objet orientée vers le haut. La lecture du contenu peut être suspendue en réponse à deux déplacements successifs de l'objet séparés d'un laps de temps inférieur à une deuxième durée maximale ; une distance parcourue lors de chaque déplacement étant inférieure à une première distance maximale et une durée de chacun des déplacements successifs étant inférieure à une troisième durée maximale.

La deuxième durée maximale peut être inférieure à 2 secondes.

La troisième durée maximale peut être inférieure à 1 secondes.

La première distance maximale peut être inférieure à 2 centimètres.

De manière préférée, la première distance maximale est inférieure à 1 centimètre.

De manière d'avantage préférée, la première distance maximale est inférieure à 0,5 centimètre.

Chacun des déplacements successifs de l'objet peut être engendré par un coup porté à l'objet.

Chacun des déplacements successifs de l'objet peut être engendré par un tapotement porté à l'objet. La piste en cours de lecture peut être lue de nouveau depuis le début en réponse à trois déplacements successifs de l'objet séparés d'un laps de temps inférieur à une quatrième durée maximale ; une distance parcourue lors de chaque déplacement étant inférieure à une deuxième distance maximale et une durée de chacun des déplacements successifs étant inférieure à la troisième durée maximale.

La quatrième durée maximale peut être inférieure à 2 secondes.

La quatrième durée maximale peut être égale à la deuxième durée maximale.

La deuxième distance maximale peut être inférieure à 2 centimètres, de préférence inférieure à 1 centimètre, de manière d'avantage préférée inférieure à 0,5 centimètre.

La deuxième distance maximale peut être égale à la première distance maximale. Lorsque la piste en cours de lecture est lue depuis un laps de temps inférieur à une cinquième durée maximale, une lecture d'une piste d'un historique comprenant des fichiers lus au cours d'une session peut être initiée en réponse à trois déplacements successifs de l'objet, ces déplacements successifs étant séparés d'un laps de temps inférieur à la deuxième durée maximale ; une distance parcourue lors de chaque déplacement étant inférieure à la deuxième distance maximale et une durée de chacun des déplacements successifs étant inférieure à la troisième durée maximale.

La cinquième durée maximale peut être inférieure à 3 secondes.

Selon un second aspect de l'invention, il est proposé un objet portable selon la revendication indépendante 12, comportant une ou plusieurs faces, ledit objet comprenant :
- une unité de stockage d'énergie,
- un module de détection de déplacements de l'objet comprenant un accéléromètre et un gyromètre,
- un haut-parleur et/ou un écran et/ou une source de vibrations, et
- une unité de traitement configurée et/ou programmée pour :
   - augmenter une intensité d'un signal émis par l'objet en réponse à la détection, par le module de détection, d'une rotation dans le sens horaire, ou respectivement anti-horaire, de l'objet par rapport à un premier axe de rotation traversant l'objet,
   - diminuer l'intensité d'un signal émis par l'objet en réponse à la détection, par le module de détection, d'une rotation dans le sens anti-horaire, ou respectivement horaire, de l'objet par rapport au premier axe de rotation.

L'accéléromètre et le gyromètre peuvent former un unique capteur.

Le module de détection peut comprendre une boussole.

L'objet peut être agencé pour émettre plusieurs signaux différents de manière simultanée ou successive.

L'accéléromètre, la boussole et le gyromètre peuvent former un unique capteur.

L'écran peut être compris sur une face de l'objet.

L'objet peut, par exemple, être une lampe.

L'objet peut, par exemple, être une enceinte.

L'objet peut, par exemple, être une télécommande.

L'unité de traitement peut être configurée et/ou programmée pour mettre en œuvre le procédé selon le premier aspect de l'invention. L'unité de traitement peut être configurée et/ou programmée pour lire un contenu média en réponse à la détection, par le module de détection, d'une agitation de l'objet, le contenu média lu étant associé à une face de l'objet orientée vers le haut.

Un contenu média peut être tout type de fichier numérique.

Un contenu média peut être une fréquence radio.

Un contenu média peut être, entre autre, une piste audio et/ou vidéo.

Le contenu média lu est associé à une face de l'objet orientée vers le haut lors de l'initiation de l'agitation.

La face de l'objet orientée vers le haut durant l'agitation est maintenue vers le haut durant toute la durée de l'agitation.

Le contenu média peut comprendre un ensemble de contenus, dans ce cas, après initiation de la lecture, les contenus média sont lus successivement ou aléatoirement. La face de l'objet orientée vers le haut peut être parallèle à un plan horizontal et en ce que le premier axe de rotation peut être perpendiculaire à ladite face orientée vers le haut. L'objet portable peut être un objet portable multimédia facetté. L'objet peut être un polyèdre. L'objet peut être un cube. L'objet peut comprendre :
- un émetteur-récepteur agencé pour être connecté à un émetteur distant d'un dispositif externe,
- une mémoire électronique ;
   l'unité de traitement étant configurée et/ou programmée pour lire des contenus média à partir de données émises par l'émetteur distant et/ou à partir de la mémoire électronique.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- la FIGURE 1 est une représentation schématique en vue de côté d'une enceinte portable selon l'invention,
- la FIGURE 2 est une représentation schématique en vue de côté d'un cube portable selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

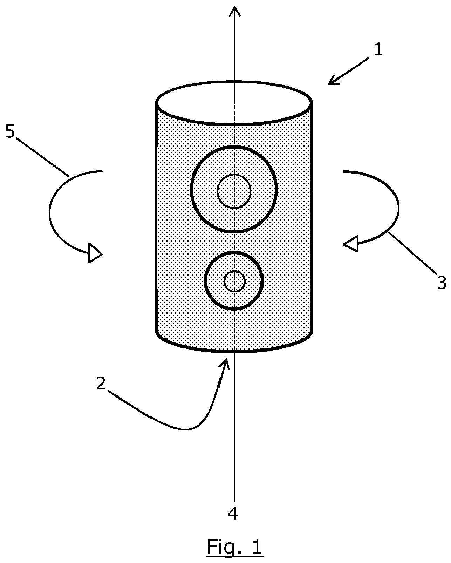

En référence à la FIGURE 1, il est décrit, dans un premier mode de réalisation, une enceinte portable 1 comprenant une face inférieure 2. L'enceinte comprend une unité de stockage d'énergie, un module de détection de déplacements l'enceinte 1, un haut-parleur et une unité de traitement. L'unité de traitement est programmée pour augmenter une intensité d'un volume sonore émis par l'enceinte 1 en réponse à la détection, par le module de détection, d'une rotation dans le sens horaire 5 de l'enceinte 1 par rapport à un premier axe de rotation 4 traversant l'enceinte 1. L'unité de traitement est programmée pour diminuer l'intensité d'un signal émis par le cube 1 en réponse à la détection, par le module de détection, d'une rotation dans le sens anti-horaire 3 du cube 1 par rapport au premier axe de rotation 4 traversant le cube 1 et étant orienté verticalement.

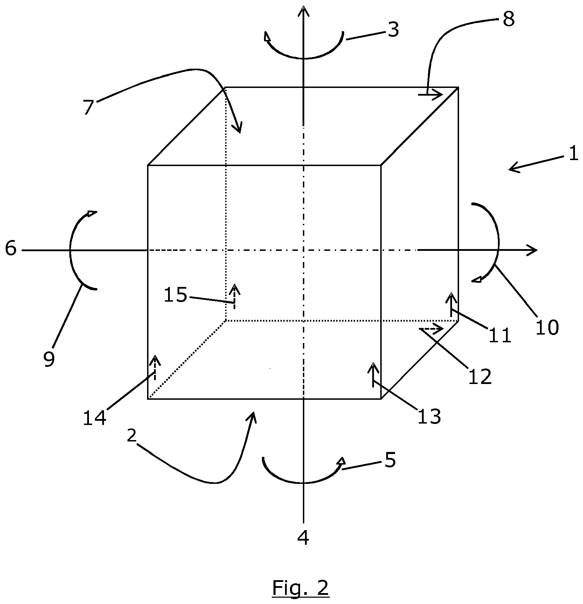

En référence à la FIGURE 2, il est décrit, dans un premier mode de réalisation, un procédé de commande d'un objet portable 1 comprenant six faces 2. A titre d'exemple non limitatif, l'objet portable est un cube conteur d'histoires et lecteur de musique et de chansons portable 1 comprenant une face inférieure 2. Le procédé comprend une augmentation d'une intensité d'un signal émis par le cube 1 en réponse à une rotation dans le sens horaire 5 du cube 1 par rapport à un premier axe de rotation 4 traversant le cube 1. A titre d'exemple non limitatif, l'intensité du signal émis par le cube 1 est le volume d'un signal sonore émis par le cube 1 en réponse à une rotation du cube 1 dans le sens horaire 5 par rapport au premier axe de rotation 4 traversant le cube 1 et étant orienté verticalement. Le procédé comprend également une diminution de l'intensité d'un volume émis par le cube 1 en réponse à une rotation dans le sens anti-horaire 3 du cube 1 par rapport au premier axe de rotation 4 traversant le cube 1 et étant orienté verticalement. Lors de chaque rotation du cube 1 d'un angle de 5°, l'intensité du volume émis augmente d'un niveau. Le cube 1 comprend neuf niveaux de volume.

Un signal sonore sous la forme d'histoires contées et de musique et de chansons émises par le cube 1. Le cube 1 émet également des signaux radio dans la gamme des Ultra-Hautes Fréquences (UHF) et des Supra-Hautes Fréquences (SHF), en particulier selon les protocoles réseau de type Wi-Fi ou Bluetooth. Le cube 1 reçoit également des signaux radio, à partir d'un émetteur distant dans la gamme des Ultra-Hautes Fréquences (UHF) et des Supra-Hautes Fréquences (SHF), en particulier selon les protocoles réseau de type Wi-Fi ou Bluetooth.

Lorsque le cube 1 est en état de veille, le passage du cube 1 de l'état de veille à un état activé est initié en réponse à une rotation du cube 1 d'un angle supérieur ou égal à 450° par rapport à un axe de rotation traversant le cube 1 et étant perpendiculaires à deux faces opposées du cube 1. Dans ce cas, lorsque la rotation du cube 1 est interrompue pendant un laps de temps supérieur ou égal à 2 secondes, l'angle de rotation du cube 1, pris en compte pour initier le passage du cube 1 de l'état de veille à l'état activé, est réinitialisé. Autrement dit, lorsque la rotation du cube 1 est interrompue pendant un laps de temps supérieur ou égal à 2 secondes, l'angle de rotation du cube 1 effectué préalablement à l'interruption de la rotation n'est pas pris en compte pour la mesure de l'angle initiant le passage du cube 1 de l'état de veille à l'état activé. Le sens de rotation du cube 1 peut être horaire 5 ou antihoraire 3.

Lorsque le cube 1 est en état de veille, le passage du cube 1 de l'état de veille à un état activé est également initié en réponse à une agitation du cube 1 selon un mouvement de va et vient comportant au moins trois allers-retours du cube 1. L'agitation est réalisée verticalement ou horizontalement. Une valeur d'accélération du cube 1 lors des allers-retours doit être supérieure ou égale à 2,8 fois l'accélération de la pesanteur (G). Aucune condition n'est appliquée quant à l'amplitude du mouvement d'agitation. Si les mouvements d'allers-retours imprimés au cube 1 sont interrompus pendant une durée supérieure ou égale à 2 secondes avant que trois allers-retours n'aient étés imprimés au cube 1, le nombre d'allers-retours pris en compte pour initier le passage du cube 1 de l'état de veille à l'état activé, est réinitialisé. Autrement dit, lorsque les mouvements d'allers-retours imprimés au cube 1 sont interrompus pendant une durée supérieure ou égale à 2 secondes avant que trois allers-retours n'aient étés imprimés au cube 1, le nombre d'allers-retours effectués préalablement à l'interruption ne sont pas pris en compte pour le comptage du nombre d'allers-retours initiant le passage du cube 1 de l'état de veille à l'état activé.

Un passage du cube 1 de l'état activé à l'état de veille est initié en réponse à une rotation du cube 1 d'un angle supérieur ou égal à 450° par rapport au premier axe de rotation 4. Quand le cube 1 est en état de marche, lorsque la rotation du cube 1 par rapport au premier axe de rotation 4 est interrompue pendant un laps de temps supérieur à 2 secondes, l'angle de rotation du cube 1, pris en compte pour initier le passage du cube 1 d'un état activé à un état de veille, est réinitialisé. Autrement dit, lorsque la rotation du cube 1 par rapport au premier axe de rotation 4 est interrompue pendant un laps de temps supérieur à 2 secondes, l'angle de rotation du cube 1 effectué préalablement à l'interruption de la rotation n'est pas pris en compte pour la mesure de l'angle initiant le passage du cube 1 de l'état activé à l'état de veille. Le sens de rotation du cube 1 peut être horaire 5 ou antihoraire 3.

Un passage du cube 1 de l'état activé à l'état de veille est également initié lorsque le cube 1 n'est pas mis en mouvement pendant une durée supérieure à 5 minutes.

Une lecture d'un contenu média par le cube 1 est initiée en réponse à une agitation du cube 1, le contenu média lu étant associé à une face 7 du cube 1 orientée vers le haut durant l'agitation. Le contenu média peut être tout type de fichier numérique. Le contenu média peut être une fréquence radio ou une piste audio et/ou vidéo.

A titre d'exemple non limitatif, le contenu média peut être un fichier audio et en particulier une histoire pour enfants et une lecture d'un fichier audio, parmi une liste de fichiers audio étant associée à la face 7 du cube 1 orientée vers le haut durant l'agitation, par le cube 1 est initiée en réponse à une agitation du cube 1, le fichier audio lu étant associé à une face 7 du cube 1 orientée vers le haut durant l'agitation. La face 7 du cube 1 orientée vers le haut durant l'agitation est maintenue vers le haut durant toute la durée de l'agitation. Lorsqu'une lecture est initiée, une liste de fichiers audio composée de l'ensemble des fichiers audio associés à la face du cube 1 orientée vers le haut 7 durant l'agitation est générée selon un ordre aléatoire. La lecture de la première piste de la liste en question est initiée en réponse à l'agitation du cube 1, les autres pistes de la liste sont lues successivement.

Le cube 1 peut être agencé pour lire plusieurs contenus média simultanément. A titre d'exemple non limitatif, le cube 1 peut être agencé pour lire plusieurs types de contenus média tel qu'un fichier numérique, ou une fréquence radio, ou une piste audio-vidéo. Dans ce cas, une lecture d'un type particulier de contenu média par le cube 1 est initiée en réponse à une agitation particulière du cube 1, par exemple selon une direction particulière. Dans ce cas, un type de contenu média étant associé à une face particulière du cube 1.

Un contenu média en cours de lecture est indexé dans un dossier dédié en réponse à un déplacement du cube 1 selon une trajectoire particulière prédéfinie. A titre d'exemple non limitatif, le contenu média peut, par exemple, être une piste de lecture audio ou une piste de lecture audio-vidéo. Le dossier dédié est associé à une des faces du cube 1. Une agitation du cube 1, lorsque la face à laquelle sont associés les fichiers audio stockés dans le dossier dédié est orientée vers le haut, initie la lecture de la première piste de la liste des fichiers audio stockés dans le dossier dédié. De manière alternative, l'agitation du cube 1 peut initier la lecture de la première piste d'une liste des fichiers audio stockés dans le dossier dédié générée selon un ordre aléatoire La trajectoire particulière prédéfinie correspond à un déplacement du cube 1 selon deux directions de l'espace distinctes. A titre d'exemple non limitatif, la trajectoire particulière prédéfinie est un cœur.

Lorsqu'un contenu média est en cours de lecture, un nouveau contenu média est lu en réponse à une rotation du cube 1 d'un angle supérieur à 10° par rapport à un deuxième axe de rotation 6 traversant le cube 1 et étant orienté horizontalement selon une direction prédéfinie 8 par rapport à la face du cube 1 orientée vers le haut, ladite rotation étant succédée, dans un laps de temps inférieur ou égal à 2 secondes, par un retour du cube 1 dans sa position initiale. Le nouveau contenu média succède au contenu média en cours de lecture au sein de la liste de contenus média en cours de lecture. Selon le mode de réalisation, et à titre d'exemple non limitatif, une rotation d'un angle supérieur à 30° dans le sens horaire 9 par rapport au deuxième axe de rotation 6, ledit angle étant maintenu pendant une durée inférieure à 2 secondes, engendre la lecture d'un nouveau contenu média succédant au contenu média en cours de lecture au sein de la liste de contenus média en cours de lecture. Une rotation d'un angle supérieur à 30° dans le sens antihoraire 10 par rapport au deuxième axe de rotation 6, ledit angle étant maintenu pendant une durée inférieure à 2 secondes, engendre la lecture d'un nouveau contenu média précédent le contenu média en cours de lecture au sein de la liste de contenus média en cours de lecture.

Chacune des faces du cube comporte une indication de la direction prédéfinie 8, 11, 12, 13, 14, 15 selon laquelle, lorsqu'une face est orientée vers le haut et qu'un média associé à la face est en cours de lecture, le deuxième axe de rotation 6 est orienté.

Lorsqu'un contenu média est en cours de lecture, une avance rapide vers une fin du contenu, en cours de lecture, est initiée en réponse à une rotation du cube 1 d'un angle supérieur à 10° par rapport au deuxième axe de rotation 6 traversant le cube 1 et étant orienté horizontalement selon la direction prédéfinie 8 par rapport à la face du cube 1 orientée vers le haut, l'avance rapide étant enclenchée lorsque l'angle est maintenu pendant une durée supérieure à 2 secondes et poursuivie tant que l'angle est maintenu. Lorsqu'un contenu média est en cours de lecture, un retour rapide vers un début du contenu, en cours de lecture, est initiée en réponse à une rotation du cube 1 d'un angle supérieur à 10° par rapport au deuxième axe de rotation 6 traversant le cube 1 et étant orienté horizontalement selon la direction prédéfinie 8 par rapport à la face du cube 1 orientée vers le haut, le retour rapide étant enclenchée lorsque l'angle est maintenu pendant une durée supérieure à 2 secondes et poursuivie tant que l'angle est maintenu. Selon le mode de réalisation, et à titre d'exemple non limitatif, le retour rapide est associé au sens de rotation antihoraire 10 et l'avance rapide est associée au sens de rotation horaire 9.

La lecture du contenu est suspendue en réponse à deux tapotements successifs portés par un utilisateur sur le cube 1, chaque tapotement étant séparés d'un laps de temps inférieur à 2 secondes. Chacun des tapotements correspond à un déplacement du cube 1 d'une distance inférieure à 2 centimètres et une durée de chacun des tapotements est inférieure à 1 seconde.

La piste en cours de lecture peut être lue de nouveau depuis le début en réponse à trois tapotements successifs du cube 1 séparés d'un laps de temps inférieur à 2 secondes. Une distance parcourue lors de chaque tapotement est inférieure à 2 centimètres et une durée de chacun des tapotements est inférieure à 1 seconde.

Lorsque la piste en cours de lecture est lue depuis un laps de temps inférieur à 3 secondes, une lecture d'une piste d'un historique de fichier lus au cours d'une session est initiée en réponse à trois tapotements successifs du cube 1, ces tapotements successifs étant séparés d'un laps de temps inférieur à 2 secondes. Une distance parcourue lors de chaque déplacement étant inférieure à 2 centimètres et une durée de chacun des tapotements est inférieure à 1 seconde.

En référence à la FIGURE 2, il est décrit, dans un second mode de réalisation, un objet portable comportant une ou plusieurs faces. L'objet peut, par exemple, être une lampe ou une enceinte ou une télécommande. A titre d'exemple non limitatif, l'objet portable est un cube 1 comprenant une unité de stockage d'énergie, un module de détection de déplacements du cube 1 comprenant un accéléromètre/gyromètre/boussole 9 axes (vendu sous le nom commercial de MPU-9150 par la marque commerciale InvenSense), un haut-parleur 3 Watts ou plus, un amplificateur audio (vendu sous le nom commercial de Speaker pHAT par la marque Pimoroni) et une unité de traitement (vendu sous le nom commercial de RaspberryPi Nano Zero par la marque Raspberry Pi). L'unité de traitement est programmée pour augmenter une intensité d'un signal émis par le cube 1 en réponse à la détection, par le module de détection, d'une rotation dans le sens horaire 5 du cube 1 par rapport au premier axe de rotation 4 traversant le cube 1 et étant orienté verticalement. Le cube 1 peut être agencé pour émettre un plusieurs types de signaux simultanément ou successivement. A titre d'exemple non limitatif, l'intensité du signal émis par le cube 1 est le volume d'un signal sonore. L'intensité du volume émis par le cube 1 est augmentée en réponse à une rotation du cube 1 dans le sens horaire 5 par rapport au premier axe de rotation 4 traversant le cube 1 et étant orienté verticalement. L'unité de traitement est programmée pour diminuer l'intensité d'un signal émis par le cube 1 en réponse à la détection, par le module de détection, d'une rotation dans le sens anti-horaire 3 du cube 1 par rapport au premier axe de rotation 4 traversant le cube 1 et étant orienté verticalement.

Le cube comprend une coque en plastique dure à l'intérieur de laquelle sont agencés les composants. Des éléments en plastiques mous, par exemple en caoutchouc ou silicone, comportant des motifs sont agencés, de manière amovible, sur chacune des faces du cube 1. Les motifs sont, par exemple, des pictogrammes permettant, entre autre, d'indiquer à l'utilisateur la direction prédéfinie 8, 11, 12, 13, 14, 15 selon laquelle, lorsqu'une face est orientée vers le haut et qu'un média associé à la face est en cours de lecture, le deuxième axe de rotation 6 est orienté. Une arrête du cube 1 mesure environ sept centimètres.

L'unité de traitement est programmée pour lire un contenu média en réponse à la détection, par le module de détection, d'une agitation du cube 1, le contenu média lu étant associé à une face du cube 1 orientée vers le haut. La face du cube 1 orientée vers le haut est parallèle à un plan horizontal et en ce que le premier axe de rotation est perpendiculaire à ladite face orientée vers le haut.

Le cube 1 selon l'invention comprend un émetteur-récepteur agencé pour être connecté à un émetteur distant d'un dispositif externe. A titre d'exemple non limitatif, l'émetteur-récepteur émet et reçoit dans la gamme des Ultra-Hautes Fréquences (UHF) et des Supra-Hautes Fréquences (SHF), il est en particulier agencé selon les protocoles réseau de type Wi-Fi ou Bluetooth. Le cube 1 comprend une mémoire électronique et l'unité de traitement est programmée pour lire des contenus média à partir de données émises par l'émetteur distant et/ou à partir de la mémoire électronique.

Bien sûr, l'invention n'est pas limitée aux exemples qui viennent d'être décrits et de nombreux aménagements peuvent être apportés à ces exemples sans sortir du cadre de l'invention, qui est défini par les revendications annexées.

Ainsi, dans des variantes combinables entre elles des modes de réalisation précédemment décrits :
- le signal émis par l'objet portable 1 est un signal optique ou vibratoire ou olfactif ou radio, et/ou
- le signal émis par l'objet portable 1 comprend un ensemble de signaux émis par l'objet portable 1, et/ou
- dans le cas où l'objet portable 1 ne comporte qu'une seule face, l'axe de rotation traversant l'objet 1 est perpendiculaire à la face de l'objet 1, et/ou
- le passage du cube 1 de l'état activé à l'état de veille est initié en réponse à une rotation du cube 1 d'un angle supérieur ou égal à 360° par rapport au premier axe de rotation 4, et/ou
- la trajectoire particulière prédéfinie correspond à un déplacement du cube 1 selon plus de deux directions de l'espace, et/ou
- la trajectoire particulière prédéfinie est comprise dans un plan, et/ou
- la trajectoire particulière prédéfinie est une forme géométrique, et/ou
- une liste de contenus média peut comprendre un ensemble de fichiers numériques et/ou un ensemble de pistes audio et/ou vidéo et/ou un ensemble de fréquences radio, et/ou
- le contenu média lu est associé à une face 7 du cube 1 orientée vers le haut lors de l'initiation de l'agitation, et/ou
- chacun des tapotements correspond à un déplacement du cube 1 d'une distance inférieure à 1 centimètre, et/ou
- chacun des tapotements correspond à un déplacement du cube 1 d'une distance inférieure à 0,5 centimètre, et/ou
- la piste de lecture lue en réponse à trois tapotements successifs du cube 1 est la dernière piste ajoutée à l'historique de fichier lus, et/ou
- l'objet portable 1 comprend une seule face, et/ou
- l'objet portable 1 selon l'invention est un objet portable 1 multimédia facetté, et/ou
- l'objet portable 1 selon l'invention est un polyèdre, et/ou
- l'objet 1 comprend un ou plusieurs écrans et/ou une source de vibrations, et/ou
- l'écran est compris sur une face de l'objet, et/ou
- le cube comprend plusieurs haut-parleurs, et/ou
- les pictogrammes sont en relief.

De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Procédé de commande d'un objet portable (1) comprenant :
- une augmentation d'une intensité d'un signal émis par l'objet en réponse à une rotation dans le sens horaire (5), ou respectivement anti-horaire (3), de l'objet par rapport à un premier axe de rotation (4) traversant l'objet,
- une diminution de l'intensité d'un signal émis par l'objet en réponse à une rotation dans le sens anti-horaire, ou respectivement horaire, de l'objet par rapport au premier axe de rotation, le procédé étant **caractérisé en ce qu'**il comprend un passage de l'objet d'un état de veille à un état activé qui est initié en réponse à :
• une rotation de l'objet d'un angle supérieur ou égal à une première valeur d'angle minimum par rapport à un axe de rotation traversant l'objet (9, 10), et/ou
• une agitation de l'objet selon un mouvement de va-et-vient.

2. Procédé selon la revendication 1, **caractérisé en ce que** le signal émis par l'objet est un signal :
- sonore, ou
- optique, ou
- vibratoire, ou
- olfactif, ou
- radio.

3. Procédé selon la revendication 1 ou 2, **caractérisé en ce qu'**un passage de l'objet (1) d'un état activé à un état de veille est initié en réponse à une rotation de l'objet d'un angle supérieur ou égal à une deuxième valeur d'angle minimum par rapport à un deuxième axe de rotation traversant l'objet.

4. Procédé selon l'une quelconque des revendications précédentes, **caractérisé en ce qu'**une lecture d'un contenu média par l'objet (1) est initiée en réponse à une agitation de l'objet selon un mouvement de va-et-vient, le contenu média lu étant associé à une face de l'objet orientée vers le haut (7).

5. Procédé selon la revendication 4, **caractérisé en ce qu'**un contenu média en cours de lecture est indexé dans un dossier dédié en réponse à un déplacement de l'objet (1) selon une trajectoire particulière prédéfinie.

6. Procédé selon la revendication 4 ou 5, **caractérisé en ce qu'**un nouveau contenu média est lu en réponse à une rotation de l'objet (1) d'un angle supérieur à une troisième valeur d'angle minimum par rapport à un troisième axe de rotation traversant l'objet, ladite rotation étant succédée, dans un laps de temps inférieur ou égal à une première durée maximale, par un retour de l'objet dans sa position initiale, le nouveau contenu média succède au contenu média en cours de lecture au sein d'une liste de contenus média ; ladite liste de contenus média étant associée à la face de l'objet orientée vers le haut lorsque l'objet est dans sa position initiale.

7. Procédé selon l'une quelconque des revendications 4 à 6, **caractérisé en ce qu'**il comprend une avance rapide vers une fin du contenu, en cours de lecture, et un retour rapide vers un début du contenu, en cours de lecture, en réponse à une rotation de l'objet (1) d'un angle supérieur à une quatrième valeur d'angle minimum par rapport à un quatrième axe de rotation traversant l'objet, l'avance et le retour rapide étant enclenchés lorsque l'angle est maintenu pendant une durée supérieure à une première durée minimale et poursuivis tant que l'angle est maintenu, le sens de rotation de l'objet associé au retour rapide étant inverse à celui associé à l'avance rapide.

8. Procédé selon la revendication 7, **caractérisé en ce que** la face de l'objet (1) orientée vers le haut (7) est parallèle à un plan horizontal, le premier axe de rotation (4) étant perpendiculaire à ladite face orientée vers le haut, le second axe de rotation (6) étant identique au premier axe de rotation, et le quatrième axe de rotation est identique au troisième axe de rotation, perpendiculaire au premier axe de rotation et orienté selon une direction prédéfinie par rapport à la face de l'objet orientée vers le haut.

9. Procédé selon l'une quelconque des revendications 4 à 8, **caractérisé en ce que** la lecture du contenu est suspendue en réponse à deux déplacements successifs de l'objet (1) séparés d'un laps de temps inférieur à une deuxième durée maximale ; une distance parcourue lors de chaque déplacement étant inférieure à une première distance maximale et une durée de chacun des déplacements successifs étant inférieure à une troisième durée maximale.

10. Procédé selon l'une quelconque des revendications 4 à 9, **caractérisé en ce que** la piste en cours de lecture est lue de nouveau depuis le début en réponse à trois déplacements successifs de l'objet (1) séparés d'un laps de temps inférieur à une quatrième durée maximale ; une distance parcourue lors de chaque déplacement étant inférieure à une deuxième distance maximale et une durée de chacun des déplacements successifs étant inférieure à la troisième durée maximale.

11. Procédé selon l'une quelconque des revendications 6 à 10, **caractérisé en ce que**, lorsque la piste en cours de lecture est lue depuis un laps de temps inférieur à une cinquième durée maximale, une lecture d'une piste d'un historique comprenant les fichiers lus au cours d'une session est initiée en réponse à trois déplacements successifs de l'objet (1), ces déplacements successifs étant séparés d'un laps de temps inférieur à la deuxième durée maximale, une distance parcourue lors de chaque déplacement étant inférieure à la deuxième distance maximale et une durée de chacun des déplacements successifs étant inférieure à la troisième durée maximale.

12. Objet portable (1) comportant une ou plusieurs faces (2, 7), ledit objet comprenant :
- une unité de stockage d'énergie,
- un module de détection de déplacements de l'objet comprenant un accéléromètre et un gyromètre,
- un haut-parleur et/ou un écran et/ou une source de vibrations, et
- une unité de traitement configurée et/ou programmée pour :
• augmenter une intensité d'un signal émis par l'objet en réponse à la détection, par le module de détection, d'une rotation dans le sens horaire (5), ou respectivement anti-horaire (3), de l'objet par rapport à un premier axe de rotation (4) traversant l'objet,
• diminuer l'intensité d'un signal émis par l'objet en réponse à la détection, par le module de détection, d'une rotation dans le sens anti-horaire, ou respectivement horaire, de l'objet par rapport au premier axe de rotation,
l'objet portable étant **caractérisé en ce que** l'unité de traitement est configurée et/ou programmée pour initier le passage de l'objet d'un état de veille à un état activé en réponse à :
• une rotation de l'objet d'un angle supérieur ou égal à une première valeur d'angle minimum par rapport à un axe de rotation traversant l'objet (9, 10), et/ou
• une agitation de l'objet selon un mouvement de va-et-vient.

13. Objet (1) selon la revendication 12, **caractérisé en ce que** l'unité de traitement est configurée et/ou programmée pour lire un contenu média en réponse à la détection, par le module de détection, d'une agitation de l'objet, le contenu média lu étant associé à une face de l'objet orientée vers le haut (7).

14. Objet (1) selon la revendication 12 ou 13, **caractérisé en ce que** la face de l'objet orientée vers le haut (7) est parallèle à un plan horizontal et **en ce que** le premier axe de rotation (4) est perpendiculaire à ladite face orientée vers le haut.

15. Objet (1) selon l'une quelconque des revendications 12 à 14, **caractérisé en ce que** l'objet portable est un objet portable multimédia facetté.

16. Objet (1) selon l'une quelconque des revendications 12 ou 15, **caractérisé en ce que** l'objet est un polyèdre.

17. Objet (1) selon l'un quelconque des revendications 12 à 16, **caractérisé en ce que** l'objet est un cube.

18. Objet (1) selon l'une quelconque des revendications 13 à 17, comprenant :
- un émetteur-récepteur agencé pour être connecté à un émetteur distant d'un dispositif externe,
- une mémoire électronique ;
l'unité de traitement étant configurée et/ou programmée pour lire des contenus média à partir de données émises par l'émetteur distant et/ou à partir de la mémoire électronique.

## Patentansprüche

1. Verfahren zur Steuerung eines tragbaren Gegenstands (1), umfassend:
- eine Erhöhung einer Intensität eines Signals, welches von dem Gegenstand als Antwort auf eine Drehung des Gegenstands um eine erste, durch den Gegenstand hindurch verlaufende Drehachse (4) im Uhrzeigersinn (5) bzw. gegen den Uhrzeigersinn (3) gesendet wird,
- eine Reduzierung der Intensität eines Signals, welches durch den Gegenstand als Antwort auf eine Drehung des Gegenstands um die erste Drehachse gegen den Uhrzeigersinn bzw. im Uhrzeigersinn gesendet wird,
wobei das Verfahren **dadurch gekennzeichnet ist, dass** es einen Übergang des Gegenstands von einem Stand-By-Zustand in einen aktiven Zustand umfasst, welcher initiiert wird als Antwort auf:
• eine Drehung des Gegenstands in einem Winkel größer oder gleich einem ersten Mindestwert eines Winkels zu einer durch den Gegenstand hindurch verlaufenden Drehachse (9, 10), und/oder
• ein Schütteln des Gegenstands in einer Hin- und Herbewegung.

2. Verfahren nach Anspruch 1, **dadurch gekennzeichnet, dass** es sich bei dem durch den Gegenstand gesendeten Signal um ein:
- Ton- oder
- Licht- oder
- Vibrations- oder
- Geruchs- oder
- Radiosignal
handelt.

3. Verfahren nach Anspruch 1 oder 2, **dadurch gekennzeichnet, dass** ein Übergang des Gegenstands (1) von einem aktiven Zustand in einen Stand-By-Zustand als Antwort auf eine Drehung des Gegenstands in einem Winkel größer oder gleich einem zweiten Mindestwert des Winkels zu einer zweiten, durch den Gegenstand hindurch verlaufenden Drehachse initiiert wird.

4. Verfahren nach einem der vorhergehenden Ansprüche, **dadurch gekennzeichnet, dass** ein Lesen eines Media-Inhalts durch den Gegenstand (1) als Antwort auf ein Schütteln des Gegenstands in einer Hin- und Herbewegung initiiert wird, wobei der gelesene Media-Inhalt einer nach oben (7) gerichteten Seite des Gegenstands zugeordnet wird.

5. Verfahren nach Anspruch 4, **dadurch gekennzeichnet, dass** ein Media-Inhalt, der gerade gelesen wird, in eine Datei indexiert wird, welche zur Antwort auf eine Bewegung des Gegenstands (1) gemäß einer besonderen, vorbestimmten Laufstrecke bestimmt ist.

6. Verfahren nach Anspruch 4 oder 5, **dadurch gekennzeichnet, dass** ein neuer Media-Inhalt als Antwort auf eine Drehung des Gegenstands (1) in einem Winkel größer als einen dritten Mindestwert des Winkels zu einer dritten, durch den Gegenstand hindurch verlaufenden Drehachse gelesen wird, wobei auf die Drehung in einer Zeitdauer kleiner oder gleich einer ersten Höchstdauer eine Rückkehr des Gegenstands in seine Ausgangsposition folgt, der neue Media-Inhalt auf den Media-Inhalt, welcher innerhalb einer Liste von Media-Inhalten gerade gelesen wird, folgt; wobei die Liste der Media-Inhalte der Seite des Gegenstands zugeordnet wird, welche nach oben gerichtet ist, wenn sich der Gegenstand in seiner Ausgangsposition befindet.

7. Verfahren nach einem der Ansprüche 4 bis 6, **dadurch gekennzeichnet, dass** es ein Vorspulen zu einem Ende des Inhalts während des Lesens und ein Rückspulen zu einem Anfang des Inhalts während des Lesens als Antwort auf eine Drehung des Gegenstands (1) in einem Winkel größer als einen vierten Mindestwert des Winkels zu einer vierten, durch den Gegenstand hindurch verlaufenden Drehachse umfasst, wobei das Vor- und das Rückspulen eingeschaltet werden, wenn der Winkel für eine Dauer länger als eine erste Mindestdauer gehalten wird, und fortgeführt, solange der Winkel gehalten wird, wobei die dem Zurückspulen zugeordnete Drehrichtung des Gegenstands umgekehrt zu der dem Vorspulen zugeordneten Drehrichtung ist.

8. Verfahren nach Anspruch 7, **dadurch gekennzeichnet, dass** die nach oben (7) gerichtete Seite des Gegenstands (1) parallel zu einer horizontalen Ebene verläuft, wobei die erste Drehachse (4) senkrecht zu der Seite verläuft, welche nach oben gerichtet ist, wobei die zweite Drehachse (6) gleich der ersten Drehachse ist, und die vierte Drehachse gleich der dritten Drehachse ist, senkrecht zur ersten Drehachse verläuft und in einer vorbestimmten Richtung gegenüber der nach oben gerichteten Seite des Gegenstands gerichtet ist.

9. Verfahren nach einem der Ansprüche 4 bis 8, **dadurch gekennzeichnet, dass** das Lesen des Inhalts in Antwort auf zwei, durch eine Zeitspanne kleiner als eine zweite Höchstdauer getrennte, aufeinander folgende Bewegungen des Gegenstands (1) angehalten wird; wobei eine bei jeder Bewegung zurückgelegte Strecke kleiner als eine erste Höchststrecke und eine Dauer jeder der aufeinander folgenden Bewegungen kleiner als eine dritte Höchstdauer ist.

10. Verfahren nach einem der Ansprüche 4 bis 9, **dadurch gekennzeichnet, dass** in Antwort auf drei aufeinander folgende, durch eine Zeitspanne kleiner als eine vierte Höchstdauer getrennte Bewegungen des Gegenstands (1) die Spur, die gerade gelesen wird, erneut vom Anfang an gelesen wird; wobei eine bei jeder Bewegung zurückgelegte Strecke kleiner als eine zweite Höchststrecke und eine Dauer jeder der aufeinander folgenden Bewegungen kleiner als eine dritte Höchstdauer ist.

11. Verfahren nach einem der Ansprüche 6 bis 10, **dadurch gekennzeichnet, dass** wenn die Spur, welche gerade gelesen wird, seit einer Zeitspanne kleiner als eine fünfte Höchstdauer gelesen wird, wird ein Lesen einer Spur eines Verlaufs, der die während einer Sitzung gelesenen Dateien umfasst, initiiert in Antwort auf drei Bewegungen hintereinander des Gegenstands (1), wobei diese aufeinander folgenden Bewegungen durch eine Zeitspanne kleiner als die zweite Höchstdauer getrennt sind,
- wobei eine bei jeder Bewegung zurückgelegte Strecke kleiner als die zweite Höchststrecke ist und eine Dauer jeder der hintereinander folgenden Bewegungen kleiner als die dritte Höchstdauer ist.

12. Tragbarer Gegenstand (1), enthaltend eine oder mehrere Seiten (2, 7), wobei der Gegenstand umfasst:
- eine Einheit zur Energiespeicherung,
- ein Modul zur Erkennung von Bewegungen des Gegenstands, einen Beschleunigungssensor und ein Gyrometer umfassend,
- einen Lautsprecher und/oder einen Bildschirm und/oder eine Vibrationsquelle, und
- eine Bearbeitungseinheit, dazu konfiguriert und/oder programmiert:
• zur Erhöhung einer Intensität eines Signals, welches durch den Gegenstand als Antwort auf die Erkennung, durch das Erkennungsmodul, einer Drehung des Gegenstands um eine erste, durch den Gegenstand hindurch verlaufende Drehachse (4) im Uhrzeigersinn (5) bzw. gegen den Uhrzeigersinn (3) gesendet wird,
• zur Reduzierung der Intensität eines Signals, welches durch den Gegenstand als Antwort auf die Erkennung, durch das Erkennungsmodul, einer Drehung des Gegenstands um die erste Drehachse gegen den Uhrzeigersinn bzw. im Uhrzeigersinn gesendet wird,
wobei der tragbare Gegenstand **dadurch gekennzeichnet ist, dass** die Verarbeitungseinheit dazu konfiguriert und/oder programmiert ist, den Übergang des Gegenstands von einem Stand-By-Zustand in einen aktiven Zustand zu initiieren in Antwort auf:
• eine Drehung des Gegenstands in einem Winkel größer oder gleich einem ersten Mindestwert des Winkels zu einer durch den Gegenstand hindurch verlaufenden Drehachse (9, 10), und/oder
• ein Schütteln des Gegenstands in einer Hin- und Herbewegung.

13. Gegenstand (1) nach Anspruch 12, **dadurch gekennzeichnet, dass** die Verarbeitungseinheit dazu konfiguriert und/oder programmiert ist, einen Media-Inhalt in Antwort auf die Erkennung, durch das Erkennungsmodul, eines Schüttelns des Gegenstands zu lesen, wobei der gelesene Media-Inhalt einer nach oben (7) gerichteten Seite des Gegenstands zugeordnet ist.

14. Gegenstand (1) nach Anspruch 12 oder 13, **dadurch gekennzeichnet, dass** die nach oben (7) gerichtete Seite des Gegenstands parallel zu einer horizontalen Ebene verläuft und dadurch, dass die erste Drehachse (4) senkrecht zur nach oben gerichteten Seite verläuft.

15. Gegenstand (1) nach einem der Ansprüche 12 bis 14, **dadurch gekennzeichnet, dass** der tragbare Gegenstand ein tragbarer Multimedia-Gegenstand mit Facetten ist.

16. Gegenstand (1) nach einem der Ansprüche 12 oder 15, **dadurch gekennzeichnet, dass** der Gegenstand ein Polyeder ist.

17. Gegenstand (1) nach einem der Ansprüche 12 bis 16, **dadurch gekennzeichnet, dass** der Gegenstand ein Würfel ist.

18. Gegenstand (1) nach einem der Ansprüche 13 bis 17, umfassend:
- einen Sender-Empfänger, welcher derart angeordnet ist, um mit einem Sender verbunden zu sein, welcher von einer externen Vorrichtung beabstandet ist,
- ein elektronisches Speichermedium;
wobei die Verarbeitungseinheit dazu konfiguriert und/oder programmiert ist, Media-Inhalte anhand von Daten zu lesen, welche durch den beabstandeten Sender und/oder vom elektronischen Speichermedium aus gesendet werden.

## Claims

1. Method for controlling a portable object (1) **characterized in that** it comprises:
- increasing the strength of a signal emitted by the object in response to a clockwise (5), or respectively anti-clockwise (3), rotation of the object with respect to a first axis of rotation (4) passing through the object,
- reducing the strength of a signal emitted by the object in response to an anti-clockwise, or respectively clockwise, rotation of the object with respect to the first axis of rotation,
the method being **characterized in that** it comprises passage of the object from a standby state to an activated state which is initiated in response to:
• a rotation of the object by an angle greater than or equal to a first minimum angle value with respect to an axis of rotation passing through the object (9, 10), and/or
• an agitation of the object in a back and forth motion.

2. Method according to claim 1, **characterized in that** the signal emitted by the object is:
- a sound signal, or
- an optical signal, or
- a vibration signal, or
- an olfactory signal, or
- a radio signal.

3. Method according to claim 1 or 2, **characterized in that** passage of the object (1) from an activated state to a standby state is initiated in response to a rotation of the object by an angle greater than or equal to a second minimum angle value with respect to a second axis of rotation passing through the object.

4. Method according to any one of the preceding claims, **characterized in that** reading of an item of media content by the object (1) is initiated in response to an agitation of the object in a back and forth motion, the item of media content read being associated with a face of the object oriented upwards (7).

5. Method according to claim 4, **characterized in that** an item of media content being read is indexed in a dedicated folder in response to a displacement of the object (1) according to a particular predefined trajectory.

6. Method according to claim 4 or 5, **characterized in that** a new item of media content is read in response to a rotation of the object (1) by an angle greater than a third minimum angle value with respect to a third axis of rotation passing through the object, said rotation being followed, in a period of time shorter than or equal to a first maximum duration, by a return of the object to its initial position, the new item of media content follows the item of media content being read within a list of items of media content; said list of items of media content being associated with the face of the object oriented upwards when the object is in its initial position.

7. Method according to any one of claims 4 to 6, **characterized in that** it comprises fast forwarding to the end of the item of content being read, and rewinding to the beginning of the item of content being read, in response to a rotation of the object (1) by an angle greater than a fourth minimum angle value with respect to a fourth axis of rotation passing through the object, fast forwarding and rewinding being triggered when the angle is held for a duration greater than a first minimum duration and continued while the angle is held, the direction of rotation of the object associated with the rewinding being opposite to that associated with the fast forwarding.

8. Method according to claim 7, **characterized in that** the face of the object (1) oriented upwards (7) is parallel to a horizontal plane, the first axis of rotation (4) being perpendicular to said face oriented upwards, the second axis of rotation (6) being identical to the first axis of rotation, and the fourth axis of rotation is identical to the third axis of rotation, perpendicular to the first axis of rotation and oriented in a predefined direction with respect to the face of the object oriented upwards.

9. Method according to any one of claims 4 to 8, **characterized in that** reading of the content is suspended in response to two successive displacements of the object (1) separated by a period of time shorter than a second maximum duration; a distance travelled during each displacement being shorter than a first maximum distance and a duration of each of the successive displacements being shorter than a third maximum duration.

10. Method according to any one of claims 4 to 9, **characterized in that** the track being read is read again from the beginning in response to three successive displacements of the object (1) separated by a period of time shorter than a fourth maximum duration; a distance travelled during each displacement being shorter than a second maximum distance and a duration of each of the successive displacements being less than the third maximum duration.

11. Method according to any one of claims 6 to 10, **characterized in that**, when the track being read has been read for a period of time shorter than a fifth maximum duration, reading of a track from an archive comprising the files read during a session is initiated in response to three successive displacements of the object (1), these successive displacements being separated by a period of time shorter than the second maximum duration, a distance travelled during each displacement being shorter than the second maximum distance and a duration of each of the successive displacements being shorter than the third maximum duration.

12. Portable object (1) having one or more faces, said object comprising:
- an energy storage unit,
- a module for detecting displacements of the object comprising an accelerometer and a gyrometer,
- a loud-speaker and/or a screen and/or a vibration source, and
- a processing unit configured and/or programmed to:
• increase the strength of a signal emitted by the object in response to the detection, by the detection module, of a clockwise (5), or respectively anti-clockwise (3), rotation of the object with respect to a first axis of rotation (4) passing through the object,
• reduce the strength of a signal emitted by the object in response to the detection, by the detection module, of an anti-clockwise, or respectively clockwise, rotation of the object with respect to the first axis of rotation,
the portable object being **characterized in that** the processing unit is configured and/or programmed to initiate passage of the object from a standby state to an activated state in response to:
- a rotation of the object by an angle greater than or equal to a first minimum angle value with respect to an axis of rotation passing through the object (9,10), and/or
- an agitation of the object in a back and forth motion.

13. Object (1) according to claim 12, **characterized in that** the processing unit is configured and/or programmed to read an item of media content in response to the detection, by the detection module, of an agitation of the object, the media content read being associated with a face of the object oriented upwards (7).

14. Object (1) according to claim 12 or 13, **characterized in that** the face of the object oriented upwards (7) is parallel to a horizontal plane, and **in that** the first axis of rotation (4) is perpendicular to said face oriented upwards.

15. Object (1) according to any one of claims 12 to 14, **characterized in that** the portable object is a faceted portable multimedia object.

16. Object (1) according to any one of claims 12 or 15, **characterized in that** the object is a polyhedron.

17. Object (1) according to any one of claims 12 to 16, **characterized in that** the object is a cube.

18. Object (1) according to any one of claims 13 to 17, comprising:
- a transceiver arranged to be connected to a remote emitter of an external device,
- an electronic memory;
the processing unit being configured and/or programmed to read items of media content from data emitted by the remote emitter and/or from the electronic memory.
